# EUROPEAN PATENT APPLICATION

(11) **EP 3 477 531 A1**
(43) Date of publication of application: **01.05.2019**
(21) Application number: 17199398.3
(22) Date of filing: 31.10.2017
(51) Int. Cl.: G06F 21/83

(54) **INTEGRITY OF USER INPUT IN WEB PAGES**

(71) Applicant: ETH Zurich, 8092 Zurich (CH)
(72) Inventor: DHAR, Aritra, 8008 Zurich (CH); YU, Der-Yeuan, 8046 Zurich (CH); CAPKUN, Srdjan, 8049 Zürich (CH)

(57) **Abstract**

Method comprising: loading in a browser running on a host (H) a web page from a remote server (S), wherein the web page comprises at least one user input field; inputting over a peripheral device (P) connected over a peripheral connection with the host (H) user input into the at least one user input field; encrypting and/or signing the user input in the peripheral device (P) and sending the signed and/or encrypted user input to the server (S); and checking in the remote server (S) the integrity of the user input based on the encrypted and/or signed user input.

## Description

### Field of the invention

The present invention concerns a system, a method, a peripheral device, a remote server and a computer program for securing the integrity of user input via a peripheral device into at least one user input field of a web page loaded in a browser of a host whose security could be compromised by malicious third parties.

### Description of related art

More and more sensitive information is transmitted over web interfaces. Banking transactions, web-programming of medical devices, controlling of fabrication processes, home automation are just a few applications, where sensitive data are transmitted over a web-interface. A secure channel as created by the Transport Layer Security (TLS) protocol, previously called the Secure Socket Layer (SSL), is used to transport these sensible data securely from a host to a remote web server. However, when the host is compromised by a malicious third party, the sensitive data input by a user can be maliciously changed before being submitted to the remote server.

### Brief summary of the invention

The object of this invention is to find a solution for checking at a remote server the integrity of user input in a web interface.

This object is solved by the independent claims.

The encryption and/or signing of the user input already in the peripheral device allow(s) the remote server to check the integrity of the user input. It is much more difficult for third parties to compromise such a peripheral device, since the malicious third party needs to hack the peripheral device.

The object is further solved by a method for a remote server comprising the following steps: Receiving a request for a web page with at least one user input field; sending the requested web site with an executable program to the requesting browser of a host (H), wherein the executable program is configured to cause a peripheral device (P) connected to the host (H) via the peripheral device (P) to encrypt and/or sign a user input in the user input field of the web page and to send the encrypted and/or signed user input to the server (S); receiving the user input encrypted and/or signed; and checking the integrity of the user input based on the encrypted and/or signed user input.

The object is further solved by a remote server configured to perform the following steps: The remote server analyses a requested web page, if the web page comprises at least two swappable user input fields which allow interchangeable user input. If the web page comprises at least two swappable user input fields, the remote server divides the web page in at least two sub web pages such that each sub web page does not contain more than one of the swappable user input fields. The web page receives user input for the at least one user input field of each sub web page separately.

This solution avoids that a malicious host could swap the user input of two user input fields.

Further embodiments of the invention are disclosed in the dependent claims or in the subsequent description of one exemplary embodiment of the invention.

### Brief Description of the Drawings

The invention will be better understood with the aid of the description of an embodiment given by way of example and illustrated by the figures, in which:
Fig. 1 shows a system according to one embodiment of the invention.
Fig. 2 shows a method according to one embodiment of the invention.
Fig. 3 shows a method according to another embodiment of the invention.

### Detailed Description of possible embodiments of the Invention

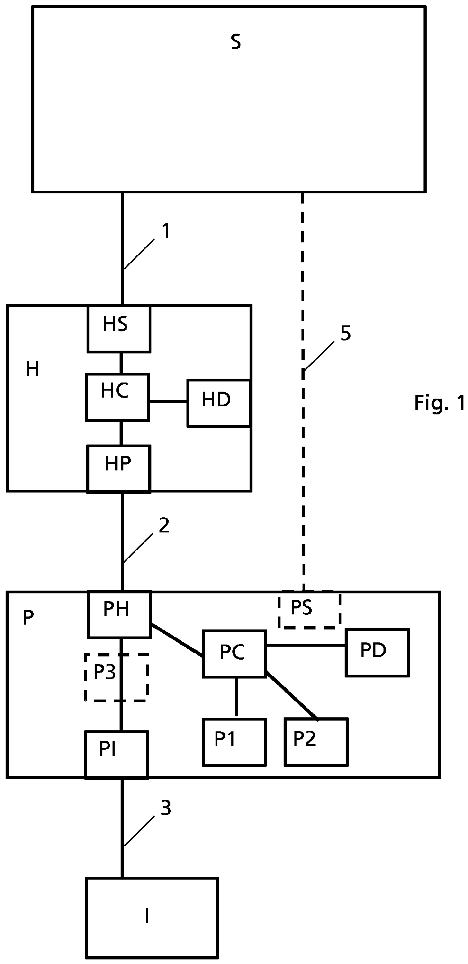

Fig. 1 shows a system comprising a remote server S, a host H, a peripheral device P and user input means I.

The remote server S is configured to receive a request for a web page from the host H and to send the requested web page to the host H. The requested web page is normally identified by an address in the request. The address is for example a Uniform Resource Locator (URL), a domain name and/or an IP address. The web page can be any page that can be accessed by a browser in the host, e.g. an html page. The web page comprises at least one user input field for submitting user input to the remote server (S). In a preferred embodiment, the at least one user input field is configured to receive characters as user input. The remote server S comprises a server key pair with a server secret key and a server public key. Preferably, the server comprises a server certificate comprising the server public key (and information about the server). Preferably, the server certificate is signed (directly or at the end of the certificate chain) by a trusted authority.

The host H is connected over a communication connection to the server S. The communication connection 1 comprises any communication connection with the server like internet, LAN, WLAN, a mobile phone network like GPRS, UMTS, LTE, others or any combination of those. The communication connection 1 comprises in a preferred embodiment at least partly the internet. However, the communication connection 1 could also be without an internet connection, e.g. if the server S and the host H are arranged in the same LAN network or are connected by any other communication connection 1 not requiring internet.

The host H is any general computing device allowing to run a browser software like Chrome, Explorer, Safari, Firefox, etc. Examples for the host are a personal computer, a tablet, a smartphone, etc. The host H has a processor HC for processing different host applications, in particular the browser application. The host H has preferably the usual components of general processing devices like RAM, ROM, Hard disc, etc (not shown). The host H has further a display interface HD for outputting a signal to be displayed on a display of the host H. The display can be integrated in the host H or can be externally connected to the host H. If in the following the display of information on the host H is described, it means that a display signal including the information to be displayed is output to the display interface HD. The display signal output is then displayed on the display of the host H. The host H has a server interface HS to access the server S over the communication connection 1. The server interface HS is for example an Ethernet socket and/or a WLAN interface. The host H comprises further a peripheral interface HP for connecting the peripheral device P over a peripheral connection 2. Preferably, the peripheral interface HP is a Universal Serial Bus (USB) socket/interface or a Bluetooth interface. The peripheral interface HP is configured to connect local peripheral devices of the host H like keyboard, display, printer, hard disc and in particular the peripheral device P to the host H.

The peripheral connection 2 is a connection configured to connect local peripheral devices of the host H like keyboard, display, printer, hard disc and in particular the peripheral device P to the host H. In a preferred embodiment, the peripheral connection 2 is a USB or Bluetooth connection. In a preferred embodiment, the peripheral connection 2 is not a WLAN or LAN connection.

The peripheral device P comprises a host interface PH for connecting the peripheral device P over the peripheral connection 2 with the host H. The peripheral device P comprises an input interface PI for receiving user input from user input means I. The user input means I can be included in the same peripheral device P or can be arranged in a separate input device connected over a further peripheral connection 3 as shown in Fig. 1. In the first case, the input interface could simply correspond to the internal connection of the user input means I in the peripheral device P, e.g. the internal bus system of the peripheral device P. In the latter embodiment, the further peripheral connection 3 is preferably a USB or a Bluetooth connection. However, other peripheral connection protocols are possible. In one embodiment, the further peripheral connection 3 follows the same protocol as the peripheral connection 2, e.g. both interfaces PI and PH are USB sockets. In this case, the two interfaces PI and PH can be directly connected by a USB connection to forward any information coming from PI over PH to the host H. Alternatively, it is also possible that a converter P3 is arranged between PI and PH to convert the input from PI from the PI protocol to the PH protocol, e.g. from Bluetooth to USB or vice versa. Instead of the converter P3, the input from PI could be received in a processor PC and converted in there in the output protocol of PH. The peripheral device P is configured to receive user input from user input means I at the input interface PI and to send the received user input to the host H. The peripheral device P is preferably realized as embedded device.

The user input means I can be any user input means configured to fill out the at least one user input field of the web page loaded in the browser of the host H. Preferably, the user input means is configured to create digital characters in response to user input and to send the created digital characters, preferably in real time after the user input, to the peripheral device P. A preferred embodiment of the user input means is a keyboard. Digital characters refer to letters, numbers, phonemes, words, signs (like Chinese, Korean, Japanese signs), etc. in any digital format like ASCII, Unicode, etc..

The peripheral device P comprises preferably further a display PD, a first storage P1 and a second storage P2. Preferably, the first storage P1 stores a peripheral key pair with a peripheral public key and a peripheral secret key. The first storage P1 comprises preferably further a peripheral certificate comprising the peripheral public key (and information of the peripheral device P). Preferably, the peripheral certificate is signed (directly or at the end of the certificate chain) by a trusted authority. Preferably, the first storage P1 further stores the executable program code for executing the described functions of the peripheral device P in the processor PC. Preferably, the first storage P1 is read-only or can only be accessed by the manufacturer for updating the peripheral key pair and/or the stored software. The second storage P2 is for temporally storing/recording user input for the at least one user input field of the web page loaded in the browser of the host H in a secure mode of the peripheral device P and/or for temporally storing the server public key and/or the server certificate. The first storage P1 and the second storage P2 can be also united in the same storage or could be further separated in more than two storages without any limitation of the invention. In general, the first and second storage P1 and P2 form a storage system (which could be configured differently) storing the information described as stored in the first and second storage P1 and P2.

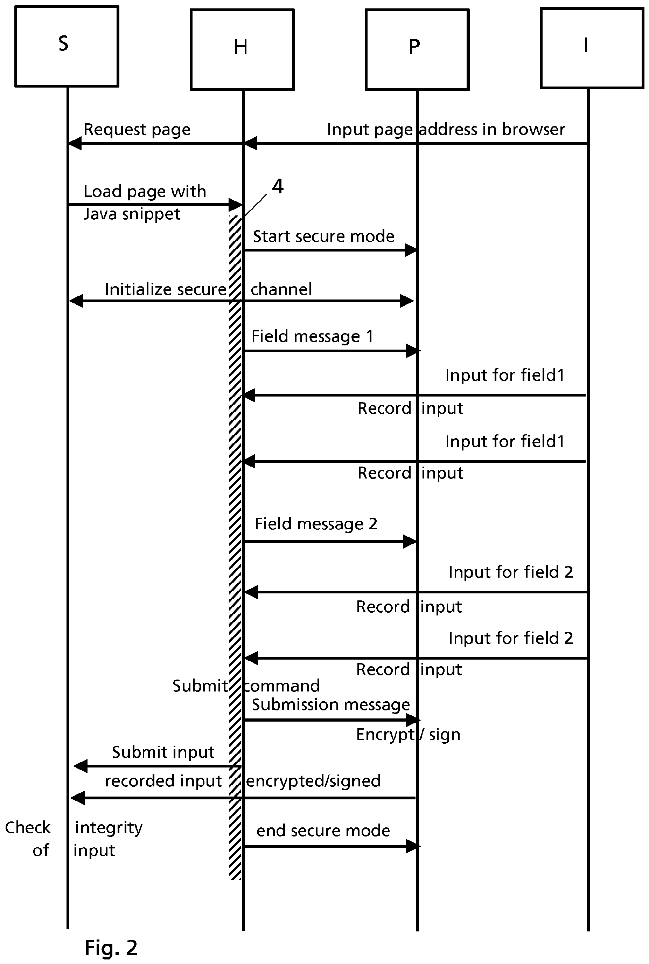

The functions of the system, the host H, the remote server S, the peripheral device P and the user input means I are described in the context of the example shown in Fig. 2.

The browser operating on the host H requests the web page from the server S. Normally this can be performed by clicking on a link on another web page or by inputting the address of the web page with any user input means. The user input means used for inputting the address can also be the input means I connected over the peripheral device P as shown in Fig. 2. The server S sends to the host H and the host H loads from the server S, respectively, the web page. The host H displays the web page from the server S including the user input fields which have to be filled out by a user of the host H and submitted to the server S. Preferably, the web page is an HTTPS web page or requires otherwise a secure channel (TLS) between the host H and the server S.

In a preferred embodiment, the server S sends an executable program to the host H for controlling the operation of the peripheral device P. This executable program is preferably included in the web page and/or is loaded with the web page in the host H. The executable program is preferably interpreted and/or executed by the browser of the host H. The executable program is preferably an executable script. The executable program is preferably written in Java or Java script. The executable program is preferably a Java snippet. The executable program uses preferably the WebUSB API and/or WEBBluetooth API for accessing the peripheral device P. The WebUSB API and the WEBBluetooth API are preferably offered as plug-in or as standard configuration of the browser. When the web page is loaded on the host H, the host H or the browser, respectively executes the executable program. The striped region 4 in Fig. 2 exemplarily shows the execution time of the executable program. The execution of the executable program starts the secure mode of the peripheral device P and/or starts the security functions of the peripheral device P as described below. Even if the controlling of the peripheral device P by an executable program sent by the server S with the web page is a highly preferred embodiment, because the host H does not require any installations, plug-ins or variations for the present invention, it is alternatively also possible that the browser or the host H includes a software for causing the security functions of the peripheral device P or that the peripheral device P detects itself without the help of the host H, when the security functions need to be applied. It is also possible that the peripheral device applies always the security functions described below such that it does not need an activation of the host H.

In a preferred embodiment, the secure mode causes the establishment of a secure channel between the server S and the peripheral device P. If in the following a secure channel is mentioned without any clarification to the contrary, the secure channel between the server S and the peripheral device P is meant. Preferably, the host H (caused by the executable program) sends a message to the peripheral device P to start the secure mode and/or to initialize said secure channel. The server S and the peripheral device P preferably exchange the server public key and the peripheral public key so that the server S possess the peripheral public key and the peripheral device P possess the server public key. The exchange of the public keys or the certificates is preferably performed according to the TLS protocol or the protocol of the secure channel. However, any other exchange method is possible. Preferably, one or both of the public keys are exchanged in the form of the above-mentioned certificate. This allows the one of the server S and the peripheral device P receiving the certificate of the other one to authenticate the other one based on the signature of the other's certificate. In one embodiment, the initialization of the secure mode or the secure channel can depend on the successful authentication of one or both of the server S and the peripheral device P by the respective other. In particular, the peripheral device P could send the peripheral public key or the peripheral certificate, respectively, only if the authentication of the server S based on the server certificate was successful and/or vice versa. Once the secure channel is created between the server S and the peripheral device P, the peripheral device P can send information directly through the secure channel to the server S. The secure channel is preferably established over the host H as a non-trusted transport. This means that the information is encrypted (with the server public key) and/or signed (with the peripheral secret key). The encrypted and/or signed information is sent over the peripheral connection 2 to the host H which forwards the encrypted and/or signed information over the communication connection 1 to the server S. The browser and the host H are considered as untrusted transport and cannot change and/or read the information sent over the secure channel, at least not without being noticed by the server S. However, the secure channel can also be established over another communication channel than the peripheral connection 2, for example over an optional separate communication connection 5 to the server S which avoids the host H. This could be realized by a mobile phone connection like a GSM, GPRS, UMTS, LTE, or other. In one embodiment, the identity of the server S read from the server certificate is displayed on the display PD of the peripheral device P. This allows the user to verify the identity of the server S.

Alternatively, the information sent from the peripheral device P to the server S can also be encrypted and/or signed by other means than the secure channel. For example, the encryption and/or signature can be based on other protocols or on pre-shared keys. For some applications, pre-shared keys might be the better alternative.

In the secure mode, the peripheral device P sends the user input received from the user input means I for the input of the at least one user input field of the web page in encrypted and/or signed form to the server S. Preferably, the encrypted and/or signed user input comprises the (evtl. encrypted) user input, a check sum of the (evtl. encrypted) user input and a signature. The signature is preferably created as a function of the check sum and the peripheral secret key. If the user input is encrypted, it is encrypted preferably on the basis of a symmetric session key secretly exchanged between the server S and the peripheral device P with the establishment of the secure channel. Alternatively, it is also possible to encrypt the user input with the server public key. However, in another embodiment, the encrypted and/or signed user input could comprise any other processed information of the user input based on encryption or signing which would allow the check of the integrity of the user input in the server. For example for pre-shared (symmetric or asymmetric) keys or with the symmetric session key exchanged with the establishment of the secure channel, the encryption of the user input (without the signature) would also be sufficient to check the integrity in the server S. If the arrangement of the user input for the calculation of the checksum is unambiguous, it would also be sufficient to send just the signature as encrypted and/or signed user input to the server S to check the integrity of the user input received from the host H.

In a preferred embodiment, the user input received during the secure mode in the peripheral device P from the user input means I is transferred twice. Once the user input is transferred in real time to the host H for being displayed (in real time) on the host H in the user input fields. This user input transferred in real time is transferred in the standard user input format and/or not encrypted and/or signed. This first transferred user input corresponds to the normal functioning and/or transmission format of the user input means I. This first transferred user input can be read by the host H. "Real time" means here without any processing delay which could be detected by a human user. If the user input means creates characters, e.g. by a keyboard, each character received is immediately forwarded to the host H to be displayed in the selected user input field. The user input is transmitted then a second time in encrypted and/or signed form to the server S.

Even if it is also possible to send the encrypted and/or signed user input directly / in real time to the server S when received from the user input means I, it is preferred to send the encrypted and/or signed user input for the at least one user input field (only) after a recording time period. The user input received from the user input means I for the at least one user input field is recorded during the recording time period and then encrypted and/or signed and then sent to the server S. The recording time period ends preferably, when the user input of the at least one user input field of the web page is submitted from the browser to the server S or when the user performs an action which deselects the present field. However, it is also possible to send the encrypted and/or signed user input after different recording time periods. The end of the recording time period could be caused by a recording end message such as a submission message as shown in Fig. 2. The submission message could be sent from the executable program or the host H to the peripheral device P, when the user submits the user input of the web page. This is normally performed by pressing the submit button on the web page. The end of the recording time period could be caused by detecting in the user input received from the user input means I an user input like a tab or enter key which indicate the will of the user to send the data. The end of the recording time period could be caused by an end of recording message from the server. This is for example the case, if the user changes the field by a mouse click. Then, the executable program on the browser informs the server S and the server S can send the end of recording message to the peripheral device P over the secure channel. The recording time period starts preferably with the establishment of the secure mode or the secure channel. In another embodiment, the recording period could start with the end of a previous recording period or with a recording start message, e.g. a field message as described later.

When the user selects a first one of the at least one user input field of the web page, the executable program and/or the host H sends preferably a field message to the peripheral device P. The peripheral device P can determine from the field message the field tag (user input field ID) and/or the selection period during which the first user input field is selected or activated for user input. Alternatively, the field message could also be sent from the server S over the secure channel to the peripheral device P, if the executable program informs the server S about the selected field. The selection period corresponds to the time during which each user input is inserted the first user input field. The end of the selection period could be detected by a new field message for the selection of a second one of the at least one user input field or by a selection end message. During the selection period, the peripheral device records the user input. Since the peripheral device P knows that all the user input received is for the selected user input field, it can store the user input recorded during the selection period associated to the field tag of the selected user input field. This embodiment has the advantage that the recording of the user input for the user input fields of the web page received from the user input means I can be interrupted. For example, if the user selects another user field or another application program in the host H during the user input in the web page, the peripheral device P is informed about the deselection of the corresponding user field and the recording of the user input in the peripheral device P can be adapted accordingly. Preferably, the field tag received from the host H, presently selected and/or corresponding to the present selection time period is displayed on the display PD of the peripheral device P.

In one embodiment, the peripheral device P displays the user input received for the user input fields of the web page, received during the recording time period and/or received during the selection period(s) of the at least one user input field. The user input can be displayed in response from receiving the user input from the user input means I, i.e. in real time. The display PD can show each time a user input is received just the newly received user input or the adapted complete user input of the presently selected user input field. Alternatively or additionally, the user input can be displayed before being sent in encrypted and/or signed form to the server S on the display PD of the peripheral device P. In one embodiment, the submission of the encrypted and/or signed user input from the peripheral device P to the server S might depend further on a confirmation of the user in the peripheral device P or the user input means I.

Once the user has finished the user input in the web page, i.e. the user filled at least all obligatory user input fields of the web page, the user submits the user input to the server S. This is normally realized by a submit button on the web page, by pressing enter on a keyboard or by other measures. Depending on the web page, the user input is submitted in encrypted and/or signed form from the host H to the server S. For example, if the web page requires a secure channel between the host H and the server S, preferably a TLS connection, the user input is sent from the host H or the browser to the server in encrypted and signed form. The secure channel is however established on the basis of a key pair of the host H which is different to the peripheral key pair. The signature would then be based on the secret key of the host. In a preferred embodiment, the user input is transferred once over a first secure channel between the host H and the server S and another time over a second secure channel between the peripheral device P and the server S. However, it is also possible that the user input submitted from the host H to the server S is transmitted without any security mechanism.

In a preferred embodiment, the submission of the user input from the host H to the server S or the command for this submission causes as well the submission of the encrypted and/or signed user input from the peripheral device P to the server S. Preferably, the submission of the user input from the host H to the server S or the command for this submission causes a submission message from the host H or the browser (caused by the executed program) over the peripheral connection 2 to the peripheral device P. In response to receiving the submission message from the host H, the peripheral device P encrypts and/or signs the user input (recorded) for the user input fields of the web page. As described above, the peripheral device creates preferably a user input message body. The user input message body includes at least the user input (recorded) for the user input fields, preferably also the user input field tags associated with the corresponding user input. However, other user input message bodies are also possible. The user input message body can be encrypted in one embodiment. The user input message body is preferably encrypted by a symmetric session key created with the establishment of the secure channel. The peripheral device P creates a checksum, e.g. a hash sum, of the message body, and creates a signature on the basis of the created checksum and the peripheral secret key. Preferably, the peripheral device sends in a preferred embodiment the user input message body, the checksum and the signature to the server S. The encrypted and/or signed user input is sent from the peripheral device P over the peripheral connection 2 to the host H which just forwards the information to the remote server S.

The remote server S receives the encrypted and/or signed user input from the peripheral device P. The remote server S can then check the integrity of the user input. The integrity comprises preferably the authenticity, i.e. if the user input comes from the peripheral device P, and/or the question, if the user input was changed by the host H. The authenticity can be checked on the basis of the signature received from the peripheral device and on the basis of the peripheral certificate. There are many embodiments, to check, if the user input received was changed. Preferably, this is checked on the basis of the checksum and signature received with the encrypted and/or signed user input and on the basis of the peripheral public key. If this check is positive, the remote server S knows that the user input in the user input message body corresponds to the user input really input by the user in the user input means I. A further check could comprise the comparison of the encrypted and/or signed user input received from the peripheral device P with the user input received from the host H. If there is a difference between the two user inputs, it is very likely that the host H has been compromised. In one embodiment, the remote server S could refuse the user input, if the integrity check of the encrypted and/or signed user input was not successful.

The host H, the browser on the host H and/or the executable program could end the secure mode of the peripheral device P by sending a send secure mode message to the peripheral device P. This is for example done, when the submission of user input of the web page is finished. Therefore, the submission message could also end the secure mode after the peripheral device P has sent the encrypted and/or signed user input to the server S. It is also possible to end the secure mode by a separate message as shown in Fig. 2. This allows to use the same secure channel or secure mode for subsequent web pages with at least one input field of the same server S. In one embodiment, the server S can send a confirmation message to the peripheral device P to confirm that the integrity of the user input at the server S is accepted. This confirmation message is preferably sent over the secure channel to the peripheral device P. This confirmation message can be shown on the display PD of the peripheral device

The peripheral device P is preferably configured to operate in two working modes: A standard mode and a secure mode. In a standard mode, the peripheral device P works as a normal peripheral hub or transponder which just forwards the user input received from the user input means I. As a standard user input, this is forwarded in real time as received to the host H. This forwarding might need a conversion, if the protocol changes from the interfaces PI to PH. In a secure mode, the peripheral device P performs security functions like encrypting and/or signing the user input for the at least one user input field of the web page. Preferably, the peripheral device P performs in the security mode in addition/in parallel to the security functions also the functions of the standard mode and/or the function of forwarding the user input, preferably in real time, to the host H. It is also possible in an alternative embodiment that the peripheral device P works only in the security mode.

Preferably, the peripheral device P establishes in the secure mode a secure channel, preferably a TLS channel, between the peripheral device P and the server S for encrypting and/or signing the user input and for sending the encrypted and/or signed user input to the server S. However, it is alternatively also possible that the encryption and/or signature is performed without a secure channel. For example, the peripheral device could simply send the encrypted and/or signed user input to the host H which forwards them to the server S.

In the described embodiment, the encrypted and/or signed user input is sent from the peripheral device P over the peripheral connection 2, the host H and the communication connection 1 to the server S. However, in an alternative embodiment, it is also possible to send the encrypted and/or signed user input over a separate communication connection 5 to the server S. This separate communication connection 5 is used for all direct communications between the serve S and the peripheral device P which were transmitted in the previous embodiment over the secure channel. The server S and the peripheral device P could establish also a secure channel over the separate communication connection 5. The separate communication connection 5 preferably bypasses the peripheral connection 2 and/or the host H such that the encrypted and/or signed information are not sent over the peripheral connection 2 and/or the host H. This communication connection 5 between the peripheral device P and the server S could comprise a mobile phone connection like a GSM, GPRS, UMTS, LTE, or other. The peripheral device could comprise a separate interface PS for the separate communication connection 5, if the separate communication connection 5 cannot be connected over the same interface PH as the peripheral connection 2. The separate interface PS could be for example an interface for a mobile phone communication network like GSM, GPRS, UMTS, LTE, etc. The peripheral device P could be for example a USB stick which provides a USB connection to the host H as peripheral connection 2 and includes a mobile phone interface PS for establishing the separate communication connection 5 to the server S. The peripheral device P could also be a smartphone for establishing the separate communication connection 5 to the server S over a mobile phone network and for establishing a peripheral connection 2 to the host H over Bluetooth.

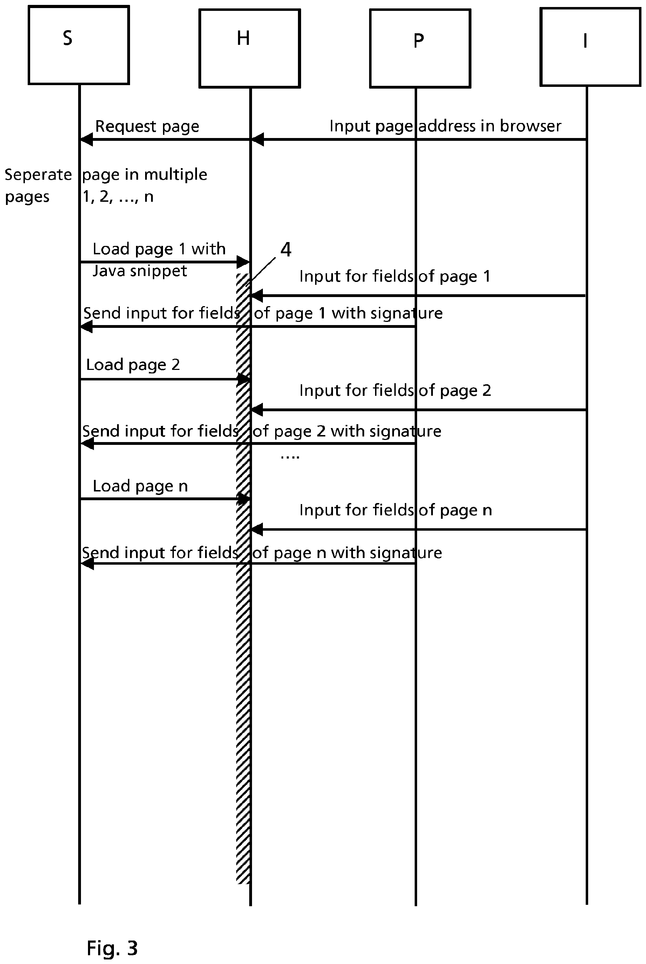

The described embodiment can prevent any attack in the host H which would change the user input into the at least one user input field of the web page. However, the host could still swap user input fields on the display of the host H such that the user inputs the user input in the wrong user input field. The following embodiment shown in Fig. 3 will prevent this swapping attack at the host H.

A program on the server S checks, if the web page requested by the host H contains at least two user input fields whose user input is interchangeable (interchangeable user input fields). A first and second user input field are considered to be swappable or interchangeable, if the potentially allowed set of user input for the first user input field and the potentially allowed set of user input for the second user input field intersects at least partly. In other words, if there is any potential user input that can be inserted in both user input fields, the two user input fields are interchangeable. If the user input is not interchangeable, the web page is submitted to the requesting host H and the process continues as described in Fig. 2. If the user input of at least two user input fields is interchangeable, the program divides the requested web page in at least two sub web pages, preferably in so many sub web pages, so that each sub web page does not contain interchangeable user input fields. The sub web pages are send to the requesting host H separately such that the user input of the user input fields is received for each sub web page separately. The sub web pages can for example be send subsequently to the host H so that the next sub web page is loaded at the host H, when the user input of the previous sub web page was submitted. The user input for each sub web page is input by the user as described in Fig. 2. However, it is also possible to provide other input mechanisms for inputting the user input in the sub web pages.

While the protection against swapping of input fields as described in Fig. 3 prevents label or field tag swapping on a web page, the attacker may perform a more sophisticated attack: the cross-page label swapping attack. In such an attack, the compromised host H first learns the labels or field tags of the user input fields in all sub web pages, potentially from a previous session between the user or host H and the server S. Then, in a new session, the host swaps the labels of two swappable fields in two different sub web pages. Since the user may not remember in which sub web page a particular user input field appears, he might be tricked into entering the wrong values for these fields.

As a solution, it is proposed that a sub web page that contains a user input field that is swappable with a user input field of another sub web page requires the user to input both the field tag (or label) and the value in the user input field. In other words, the server instructs the user to input both the field tag (or label) and the value in the user input field. The server S could realize this by adding another user input field in which the user has to enter the field tag of said swappable user input field. The instruction can be embedded in the web page for the user to see. Since the entire user input is then secured using the secure channel between the peripheral device P and the server S, the user's input value is bound to its corresponding field tag using the signature and/or encryption generated by the peripheral device P. Therefore, the server S can know the correct field tag for a given user input value, even if the malicious host swaps their field tags.

## Claims

1. Method comprising:
loading in a browser running on a host (H) a web page from a remote server (S), wherein the web page comprises at least one user input field;
inputting over a peripheral device (P) connected over a peripheral connection (2) with the host (H) user input into the at least one user input field;
**characterized in that**
the peripheral device (P) encrypts and/or signs the user input and sends the signed and/or encrypted user input to the server (S); and
the remote server (S) checks the integrity of the user input based on the encrypted and/or signed user input.

2. Method according to claim 1, wherein the peripheral connection (2) is a USB or Bluetooth connection.

3. Method according to claim 1 or 2, wherein the peripheral device (P) receives the user input from a user input means (I), wherein the user input means (I) is included in the peripheral device (P) or connected over a further peripheral connection (3) with the peripheral device (P).

4. Method according to claim 3, wherein the peripheral device (P) records the user input received from the user input means (I) for the input of the at least one input field of the web page, wherein the step of encrypting and/or signing the user input comprises encrypting and/or signing the user input recorded in the peripheral device (P).

5. Method according to claim 4,
wherein the host (H) sends field information about the selected one of the at least one user input field,
wherein the peripheral device (P)
determines from the field information a selection period and a field tag of the selected user input field,
records the user input received during the selection period from the user input means;
sends the field tag together with the recorded user input in encrypted and/or signed form to the server (S).

6. Method according to claim 4 or 5, wherein the peripheral device (P) creates a message body including for each of the at least one user input fields of the web page the corresponding recorded user input, wherein the step of encrypting and/or signing the user input recorded in the peripheral device encrypt comprises encrypting and/or signing the message body, wherein the step of sending the user input comprises sending the encrypted and/or signed message body.

7. Method according to one of claims 4 to 6, wherein the host (H) sends a submission message to the peripheral device (P), when the user input in the at least one input field of the web page is submitted to the remote server (S),
wherein the peripheral device (P), in response to receiving the submission message from the host, encrypts the user input recorded in the peripheral device (P).

8. Method according to one of claims 3 to 7, wherein the user input comprises characters, wherein the peripheral device (P) sends the characters received from the user input means a first time in real time to the host (H), wherein the peripheral device (P) sends the user input received from the user input means a second time encrypted and/or signed to the server (S).

9. Method according to one of claims 1 to 8, wherein the remote server (S) comprises a server key pair with a server secret key and a server public key, wherein the peripheral device (P) comprises a peripheral key pair with a peripheral secret key and a peripheral public key, wherein the remote server (S) and the peripheral device (P) exchange the server public key and the peripheral public key and establish a secure channel between the remote server (S) and the peripheral device (P) for sending the encrypted and/or signed user input to the remote server (S).

10. Method according to one of claims 1 to 9, wherein the at least one user input field comprises a plurality of user input fields, wherein
the remote server (S) analyses the web page, if the web page comprises at least two swappable user input fields which allow interchangeable user input,
if the web page comprises at least two swappable user input fields, the remote server (S) divides the web page in at least two sub web pages such that each sub web page does not contain more than one of the swappable user input fields, and
a user inputs and submits the user input for the at least one user input field of each sub web page separately.

11. Method for peripheral device (P) with a peripheral interface for connection with a host (H), comprising the following steps:
receiving user input for input fields of a web page loaded in a browser of the host (H);
sending the received user input over the peripheral interface;
**characterized by**
encrypting and/or signing the received user input and sending the encrypted and/or signed user input over the peripheral interface.

12. Computer program configured, when executed on a processor, to perform the method according to one of claims 1 to 12.

13. Computer program delivered with a web page to a browser on a host (H), **characterized in that** the computer program is configured, when executed on the host (H), to perform the following step:
causing a peripheral device (P) connected over a peripheral connection with the host (H) to encrypt and/or sign the user input for at least one user input field of the web page loaded in the browser of the host (H).

14. System comprising:
a remote server (S) with a web page with at least one user input field;
a host (H) connected over a communication connection (1) with the remote server (S), the host (H) comprising a browser;
a peripheral device (P) connected over a peripheral connection (2) with the host (H);
**characterized in that**
the peripheral device (P) is configured to encrypt and/or sign a user input for the at least one user input field of the web page loaded in the browser and to send the encrypted and/or signed user input to the server (S), and
the remote server (S) is configured to check the user input based on the encrypted and/or signed user input.

15. A peripheral device for secure input of user input in at least one user input field of a web page loaded on a browser of an insecure host, comprising:
an input interface (PI) for receiving user input from a user input means (I) for the at least one user input field;
a host interface (PH) for connecting the peripheral device (P) over a peripheral connection to the host (H);
**characterized by**
a storage (P2) for recording user input received at the input interface for the at least one user input field;
a processor (PC) configured during a secure mode to
record in the storage (P2) the user input received at the input interface (PI) for the at least one user input field;
encrypt and/or sign the user input recorded in the storage (P2); and
send the encrypted and/or signed user input to the server (S) of the web page.
